# EUROPÄISCHE PATENTANMELDUNG

(11) **EP 4 108 641 A1**
(43) Veröffentlichungstag der Anmeldung: **28.12.2022**
(21) Anmeldenummer: 21181469.4
(22) Anmeldetag: 24.06.2021
(51) Int. Cl.: C03B 19/06, C01B 33/18, C03C 3/06, C03C 11/00, C03C 19/00

(54) **FORMKÖRPER AUS OPAKEM QUARZGLAS SOWIE VERFAHREN ZUR HERSTELLUNG DESSELBEN**

(71) Anmelder: Heraeus Quarzglas GmbH & Co. KG, 63450 Hanau (DE)
(72) Erfinder: GÖTZENDORFER, Andreas, 63450 Hanau (DE); SCHEICH, Gerrit, 63450 Hanau (DE); TSCHOLITSCH, Nadine, 63450 Hanau (DE); HAMMERSCHMIDT, Joerg, 63450 Hanau (DE); HÖNER, Miriam Sonja, 63450 Hanau (DE)
(74) Vertreter: Staudt, Armin Walter

(57) **Zusammenfassung**

Ein bekanntes Verfahren zum Herstellen eines Formkörpers aus opakem Quarzglas, umfasst die Verfahrensschritte: (a) Bereitstellen von SiO₂-Körnung, erhalten durch Zerkleinern von Quarzglas mit einer Reinheit von mindestens 99,9 Gew.-% SiO₂, (b) Bilden einer Aufschlämmung, die eine Suspensionsflüssigkeit und die SiO₂-Körnung enthält und die einen Gesamt-Feststoffanteil aufweist, (c) Nassmahlen der SiO₂-Körnung in der Aufschlämmung unter Bildung gemahlener SiO₂-Körnungsteilchen, (d) Formen eines porösen Grünkörpers aus der Aufschlämmung, und (e) Sintern des porösen Grünkörpers zu dem Formkörper. Um hiervon ausgehend einen Formkörper aus opakem Quarzglas bereitzustellen, aus dem Komponenten für die Halbleiterfertigung mit einem homogenen Reflexionsgrad herstellbar sind, wird vorgeschlagen, dass das Nassmahlen der SiO₂-Körnung mindestens zeitweise in Gegenwart von SiO₂-Nanoteilchen erfolgt, deren Anteil am Gesamt-Feststoffanteil der Aufschlämmung im Bereich von 0,1 Gew.-% bis 10 Gew.-% liegt.

## Beschreibung

### Technischer Hintergrund

Die Erfindung betrifft einen Formkörper aus opakem, Poren enthaltendem Quarzglas mit einer geschlossenen Porosität, einer chemischen Reinheit von mindestens 99,9 Gew.-% SiO₂, einer Dichte im Bereich von 2,14 bis 2,19 g/cm³.

Weiterhin geht es in der Erfindung um ein Verfahren zum Herstellen eines Formkörpers aus opakem Quarzglas, umfassend die Verfahrensschritte:
(a) Bereitstellen von SiO₂-Körnung, erhalten durch Zerkleinern von Quarzglas mit einer Reinheit von mindestens 99,9 Gew.-% SiO₂,
(b) Bilden einer Aufschlämmung, die eine Suspensionsflüssigkeit und die SiO₂-Körnung enthält und die einen Gesamt-Feststoffanteil aufweist,
(c) Nassmahlen der SiO₂-Körnung in der Aufschlämmung, unter Bildung gemahlener SiO₂-Körnungsteilchen,
(d) Formen eines porösen Grünkörpers aus der Aufschlämmung, und
(e) Sintern des porösen Grünkörpers zu dem Formkörper,

Derartige Formkörper aus opakem Quarzglas werden beispielsweise zur Herstellung von Quarzglas-Komponenten in der chemischen Verfahrenstechnik oder in der Halbleiterfertigung zur Prozessierung von Wafern und zur Optimierung des Wärmemanagements in Prozesskammern eingesetzt. Die Quarzglas-Komponenten sind beispielsweise einfache Quarzglas-Bauteile wie etwa Rohre, Stäbe, Platten, Flansche, Ringe oder Blöcke. Oder es sind komplexe Bauteile, beispielsweise Reaktoren oder Apparaturen wie Trägerhorden, Glocken, Tiegel, Schutzschilde, Prozessrohre und dergleichen. Die Weiterverarbeitung des Formkörpers zu der Komponente aus opakem Quarzglas kann eine mechanische Bearbeitung - wie Schneiden, Fräsen, Schleifen, Polieren - und/oder eine Heißbearbeitung - wie Schweißen, Umformen, Feuerpolieren - umfassen. Zur Herstellung derartiger Formkörper aus opakem Quarzglas sind Verfahren bekannt, bei denen zunächst Quarzglaskörnung durch Zerkleinern von transparentem Quarzglas erzeugt wird, und diese in einer Flüssigkeit zu einer Aufschlämmung weiterverarbeitet wird. Im Folgenden werden für "Aufschlämmung" auch die Bezeichnungen Schlicker, Suspension oder Dispersion austauschbar verwendet.

So wird beispielsweise in der DE 43 38 807 C1 (äquivalente Veröffentlichung:
US 5,674,792 A) ein Formkörper aus opakem, geschlossenporigem Quarzglas beschrieben. Das Quarzglas zeichnet sich durch eine chemische Reinheit von mindestens 99,9 Gew.-% SiO₂ einen Hydroxylgruppengehalt von 30 bis 600 Gew.-ppm und eine Dichte im Bereich von mindestens 2,15 g/cm³ aus. Mindestens 80% der Poren haben eine Porengröße von weniger als 20µm. Zur Herstellung des Formkörpers wird natürlich vorkommender, kristalliner Quarz-Rohstoff gereinigt,
durch Elektroschmelzen zu Quarzglas erschmolzen und das Quarzglas anschließend zu feiner SiO₂-Körnung mit einer Reinheit von mehr als 99,9 Gew.-% SiO₂ zermahlen. Die gemahlene SiO₂-Körnung wird in deionisiertem Wasser unter Einsatz von Mahlkugeln durch Nassmahlen weiter zu "gemahlenen SiO₂-Körnungsteilchen" zerkleinert. Nach dem Nassmahlen liegt die Korngröße gemahlener SiO₂-Körnungsteilchen im Bereich zwischen 0,45µm und 50µm, wobei etwa 60% der SiO₂-Teilchen eine Größe im Bereich von 1 bis 10µm haben. Die so erzeugte Aufschlämmung hat einen Feststoffanteil von etwa 78% und wird in eine Gipsform gegossen, zu einem Grünkörper getrocknet und der Grünkörper durch eine Sinterbehandlung im Temperaturintervall zwischen 1350°C bis 1450°C zu dem geschlossenporigen Formkörper aus opakem Quarzglas mit einem Hydroxylgruppengehalt zwischen 100 und 500 Gew.-ppm verdichtet.

Der so erzeugte Formkörper aus opakem Quarzglas zeigt eine geringe spektrale Transmission; diese liegt im Wellenlängenbereich von 190 bis 2650 nm und bei einer durchstrahlten Schichtdicke von 1mm auf praktisch konstantem Niveau unterhalb von 10%. Er eignet sich daher zur Herstellung von Bauteilen, bei denen es auf Wärmedämmung oder Wärmedissipation bei hohen Temperaturen ankommt. Darüber hinaus zeigt das opake Quarzglas die auch sonst für Quarzglas charakteristische und vorteilhafte Eigenschaften, wie etwa einen niedrigen thermischen Ausdehnungskoeffizienten, eine hohe Temperaturstabilität sowie eine gute chemische Beständigkeit gegenüber vielen Prozessmedien.

Die DE 44 40 104 A1 (äquivalente Veröffentlichung: US 5,736,206 A) beschreibt eine Weiterbildung des Formkörpers aus der DE 43 38 807 C1. Dieser Formkörper hat einen transparenten Oberflächenbereich, der durch lokales Erhitzen der Oberfläche erzeugt wird, beispielsweise mit Hilfe eines Heizbrenners, eines Plasmabrenners oder eines CO₂-Lasers.

In der EP 3 205 630 A1 wird zur Herstellung eines Diffusormaterials aus opakem Quarzglas mit besonders hohen Reinheitsanforderungen vorgeschlagen, als Ausgangsmaterial anstelle von natürlich vorkommender Quarzglaskörnung synthetisch erzeugte transparente Quarzglaskörnung mit einem Hydroxylgruppengehalt von mindestens 200 Gew.-ppm einzusetzen. Das Ausgangsmaterial wird zerkleinert und die zerkleinerte Körnung wird in einer Aufschlämmung weiter nassvermahlen, so dass Partikelgrößen von im Mittel weniger als 10µm erhalten werden. Der Aufschlämmung wird in eine Form gegossen und zu einem Grünkörper geformt, der nach dem Trocknen bei einer Temperatur unterhalb von 1400°C zu einem Formkörper aus dem Diffusormaterial mit einer Dichte von 2,145 g/cm³ gesintert wird. Dessen Reinheit beträgt mehr als 99,99% SiO₂ unter Berücksichtigung der Verunreinigungen an Li, Na, K, Mg, Ca, Fe, Cu, Cr, Mn, Ti, Al, Zr, Ni, Mo und W von 0,4 Gew.-ppm.

Opakes Quarzglas ist auch zur Ausbildung von Beschichtungen geeignet. Schlickerbasierte Herstellungsmethoden dafür sind in der EP 2 069 244 A1 (äquivalente Anmeldung: US 8,209,998 B2) und in der EP 03 044 860 A1 (äquivalente Anmeldung: US 9,680,360 B2) beschrieben. Zur Einstellung der Fließeigenschaften des Schlickers oder zur Optimierung der Beschichtungsfunktion werden dem Schlicker SiO₂-Nanoteilchen zugesetzt.

### Technische Aufgabenstellung

Grundsätzlich gehen Produktivitätssteigerungen bei der Halbleiterfertigung einher mit einer Zunahme der Anforderungen an die Materialqualität der dabei eingesetzten Bauteile, wie Werkzeugkomponenten und Gerätschaften, insbesondere an deren chemische Reinheit. Dabei geraten mit fortschreitender Miniaturisierung der Halbleiterstrukturen auch andere Materialeigenschaften in den Fokus, die Voraussetzung für eine großflächig homogene Prozessierung der Halbleiterbauteile sind, wie beispielsweise eine hohe und gleichmäßige Reflektivität der eigesetzten Komponenten. Diese Anforderungen erfüllen die bisher bekannten Formkörper beziehungsweise Komponenten aus opakem Quarzglas nicht in hinreichendem Maß.

Der Erfindung liegt daher die Aufgabe zugrunde, einen Formkörper aus opakem Quarzglas bereitzustellen, aus dem qualitativ hochwertige Komponenten für die Halbleiterfertigung, insbesondere solche mit einem homogenen Reflexionsgrad herstellbar sind.

Außerdem liegt der Erfindung die Aufgabe zugrunde, ein Verfahren zur Herstellung eines derartigen Formkörpers aus opakem Quarzglas anzugeben.

### Allgemeine Darstellung der Erfindung

Hinsichtlich des Verfahrens wird diese Aufgabe ausgehend von einem Verfahren der eingangs genannten Gattung erfindungsgemäß dadurch gelöst, dass das Nassmahlen der SiO₂-Körnung gemäß Verfahrensschritt (c) mindestens zeitweise in Gegenwart von SiO₂-Nanoteilchen erfolgt, deren Anteil am Gesamt-Feststoffanteil der Aufschlämmung im Bereich von 0,1 Gew.-% bis 10 Gew.-%liegt.

Voraussetzung für einen homogenen Reflexionsgrad des Formkörpers ist eine homogene Dichte- und Feststoffverteilung. Bei Schlickergießverfahren - so wie hier - können Dichteunterschiede beim Formen des Grünkörpers aus der Aufschlämmung durch Sedimentation und/oder Entmischung (Segregation) entstehen. Dies gilt insbesondere dann, wenn die Aufschlämmung eine Mischung unterschiedlicher mobiler Feststoffteilchen enthält, was zu einer Anreicherung spezifischer Teilchenarten und Teilchengrößenfraktionen in unterschiedlichen Volumenbereichen des Grünkörpers führen kann. Beim Formen des Grünkörpers aus der Aufschlämmung sind die Schwerkraft und die Richtung des Flüssigkeitsabzugs (Entwässerungsrichtung) maßgebliche Einflussgrößen für die Ausbildung charakteristischer, unterschiedlicher Volumenbereiche. In der Suspensionsflüssigkeit sinken Feststoffteilchen unter Einfluss der Schwerkraft nach unten. Die Sedimentationsgeschwindkigkeit ist proportional zum Quadrat der Teilchengröße (zumindest für geringe Sedimentationsgeschwindigkeiten). Dadurch kommt es zu einer Teilchengrößensegregation. Außerdem packen sich unterschiedlich große Teilchen unterschiedlich dicht. Auf diese Weise führt Sedimentation zu Dichteunterschieden von oben nach unten. Die Erfindung zielt darauf ab, die Wirkung dieser und anderer Einflussgrößen, die zu einer inhomogenen Dichte- und Feststoffverteilung im Grünkörper führen können, zu vermindern.

Eine für das Verfahren notwendige Feststoffkomponente der Aufschlämmung ist Quarzglaskörnung (SiO₂-Körnung), die durch Zerkleinern von Quarzglas, erhalten wird. Eine weitere für das Verfahren notwendige Feststoffkomponente der Aufschlämmung sind SiO₂-Nanoteilchen. Diese werden beispielsweise aus Siliziumverbindungen erzeugt, die durch Polymerisation, Polykondensation, Oxidation, Pyrolyse, Fällung zu SiO₂ umgesetzt werden. Dabei fallen als Zwischen-, End- oder Beiprodukt feine Staubteilchen aus synthetischem SiO₂ mit Größen von weniger als 1µm, bevorzugt weniger als 500nm an, die hier als "SiO₂-Nanoteilchen" bezeichnet werden.

Während des Nassmahlens wird die Quarzglaskörnung weiter zerkleinert. Die Intensität des Zerkleinerungsprozesses kann durch Zugabe von Mahlkörpern verstärkt werden, die vorzugsweise aus synthetisch erzeugtem Quarzglas bestehen. Beim erfindungsgemäßen Verfahren erfolgt das Nassmahlen mindestens temporär oder während der gesamten Mahldauer in einer Aufschlämmung, die SiO₂ Nanoteilchen zusätzlich zu der Quarzglaskörnung enthält.

Die Teilchengrößen der SiO₂-Nanoteilchen liegen typischerweise im Bereich von etwa 100 +/- 50nm. Sie haben eine hohe Oberfläche und bewirken Kontaktpunkte im Grünkörper und erleichtern das Dichtsintern des Formkörpers. Aus diesem Grund werden der Aufschlämmung häufig SiO₂-Nanoteilchen zugesetzt, und zwar nach Abschluss des Nassmahlprozesses, was manchmal auch als "Abpudern" bezeichnet wird. Im Unterschied dazu hat es sich gezeigt, dass sich die Gegenwart von SiO₂ Nanoteilchen bereits beim Nassmahlen der Quarzglaskörnung auf einige Eigenschaften des als Verfahrensprodukt anfallenden Formkörpers günstig auswirkt. Insbesondere wird eine besonders homogene Dichteverteilung innerhalb des Formkörper-Volumens beobachtet, was im Folgenden auch als "Homogenität" bezeichnet wird. Ohne an diese Erklärung gebunden zu sein, wird dies darauf zurückgeführt, dass infolge des NassmahlProzesses an der Quarzglaskörnung fortlaufend neue Bruchflächen entstehen, die frische und vergleichsweise reaktive Oberfläche bilden, mit der die SiO₂ Nanoteilchen in Wechselwirkung treten können. Diese Wechselwirkung kann zur Ausbildung schwacher Bindungen aufgrund zwischenmolekularer Kräfte führen und die Mobilität sowohl der SiO₂-Nanoteilchen als auch der gemahlenen SiO₂-Körnungsteilchen vermindern, so dass die Feststoffverteilung innerhalb des Volumens der Aufschlämmung stabilisiert wird. Auf diese Weise kann beispielsweise der Sedimentation oder einer Segregation verschiedener Feststoffkomponenten entgegengewirkt werden.

Der so erzeugte Formkörper zeigt eine messbar homogenere Dichteverteilung als dies ohne Zusatz von SiO₂-Nanoteilchen im Nassmahlprozess erreichbar wäre. Visuell erkennbare Inhomogenitäten im Volumen des gesinterten Formkörpers wie beispielsweise transluzente Bereiche, die ohne die Zugabe von SiO₂-Nanoteilchen oder bei einer verspäteten Zugabe von SiO₂-Nanoteilchen nach dem Nassmahlprozess beobachtet worden sind, treten nicht auf. Der Formkörper hat ein visuell homogenes Erscheinungsbild.

Der Grad der Wechselwirkung hängt von der Konzentration der SiO₂-Nanoteilchen in der Aufschlämmung ab. Zur Erzielung eines nennenswerten Effekts hinsichtlich der Homogenität liegt der Anteil der SiO₂-Nanoteilchen am Gesamt-Feststoffanteil der Aufschlämmung im Bereich von 0,1 Gew.-% und 10 Gew.-%, bevorzugt im Bereich von 1 Gew.-% bis 2 Gew.-%, und er beträgt vorzugsweise maximal 5 Gew.-%. Bei sehr hohem Anteil der SiO₂-Nanoteilchen von mehr als 10 Gew.-% nimmt die Viskosität der Aufschlämmung zu, was das Gießen erschwert. Außerdem ergibt sich dadurch eine geringere Dichte der Grünkörper, wodurch das Dichtsintern erschwert wird.

Der Grad der Wechselwirkung hängt außerdem von der Dauer des Nassmahlprozesses in Gegenwart der SiO₂-Nanoteilchen ab. Dabei erfolgen im Wesentlichen Zerkleinerungsvorgänge. Im Hinblick darauf hat es sich bewährt, wenn das Nassmahlen der SiO₂-Körnung gemäß Verfahrensschritt (c) in Gegenwart von SiO₂-Nanoteilchen mindestens 1h, vorzugsweise mindestens 10h und besonders bevorzugt mindestens 120h beträgt. Ein Nassmahlprozess mit einer Dauer von mehr als 240h führt zu einem vergleichsweise geringen weiteren Zugewinn an Homogenität, wobei allerdings besonders hohe Anforderungen an die Homogenität die lange Prozessdauer rechtfertigen können.

Der Gesamt-Feststoffanteil der Aufschlämmung ergibt sich am Ende des Nassmahlprozesses. Es ist von Anfang an auf einen Sollwert eingestellt oder er wird ausgehend von einem anfänglichen Feststoffanteil durch Zugabe von weiterem Feststoff im Verlauf des Nassmahlprozesses auf den Sollwert eingestellt. Infolge von Abrieb etwaiger Mahlkörper können sich gewisse Abweichungen vom Sollwert ergeben. Der anfängliche Feststoffanteil umfasst die Quarzglaskörnung und er kann auch mindestens einen Teil der SiO₂-Nanoteilchen umfassen. Das Bilden der Aufschlämmung laut Verfahrensschritt (b) umfasst das Zusammenbringen der Suspensionsflüssigkeit mit dem anfänglichen Feststoffanteil/dem Gesamt-Feststoffanteil, der dabei in einer eigenen Dispersionsflüssigkeit aufgenommen sein kann. Der Beginn des Nassmahlprozesses ist der Zeitpunkt, an dem die Aufschlämmung - mit oder ohne zusätzliche Mahlkörper - durch Rühren, durch Rotieren, durch Anlegen von Ultraschall oder auf eine andere Art und Weise so intensiv bewegt wird, dass die Quarzglaskörnung zerkleinert wird.

Die Aufschlämmung enthält die SiO₂-Nanoteilchen von Anfang an oder die SiO₂-Nanoteilchen werden der Aufschlämmung vor Beginn des Nassmahlprozesses oder während des Nassmahlens hinzugegeben. Das Hinzugeben erfolgt vorteilhafterweise durch Aufnahme in einer Dispersion, mittels der mindestens ein Teil der SiO₂-Nanoteilchen der Aufschlämmung in kolloidaler Form mit einer spezifischen Oberfläche (BET) von mindestens 20 m²/g zugegeben werden.

Das Aufnehmen der SiO₂-Nanoteilchen in einer Dispersion vereinfacht deren Handhabung.

Die Homogenisierung erfolgt dabei durch Bewegen der Aufschlämmung beziehungsweise der Dispersion mit dem Ziel einer gleichmäßigeren Verteilung der darin enthaltenen Feststoffe.

Bei einer besonders vorteilhaften Verfahrensvariante wird die Aufschlämmung nach dem Nassmahlen unter Bewegung mindestens 1h, bevorzugt mindestens 10h, besonders bevorzugt mindestens 30h unter fortdauernder Bewegung abgekühlt.

Ein Teil der in den Mahlvorgang eingesetzten kinetischen Energie wird in Wärme umgewandelt. Dies hat zur Folge, dass sich die Aufschlämmung während des Nassmahlprozesses erwärmt. Nach Abschluss des Nassmahlprozesses liegt die Temperatur der Aufschlämmung typischerweise im Bereich von 30 bis 60°C. Es hat sich gezeigt, dass das Formen des Grünkörpers aus der erwärmten Aufschlämmung zu Inhomogenitäten im Grünkörper und im Formkörper führen kann. Daher ist bei dieser bevorzugten Verfahrensvariante ein allmähliches Abkühlen der Aufschlämmung ohne Mahlkörper und bei anhaltender Bewegung vorgesehen. Das allmähliche Abkühlen der Aufschlämmung ist beispielsweise ein gesteuertes, geregeltes oder (vorzugsweise) ein freies Abkühlen auf die Umgebungstemperatur, beispielsweise auf Raumtemperatur.

Es hat sich als günstig erwiesen, wenn die Aufschlämmung nach dem Nassmahlen SiO₂-Teilchen mit einer Teilchengrößenverteilung aufweist, die durch einen D₉₀ kleiner als 50µm und einen D₅₀-Wert kleiner als 15µm definiert ist Das Nassmahlen erfolgt dabei so lange, vorzugsweise in einer mit Kunststoff ausgekleideten Trommelmühle und unter Einsatz von Mahlkörpern aus synthetischem Quarzglas, bis eine Korngrößenverteilung mit einem D₉₀-Wert kleiner 50µm erreicht ist. Diese Teilchengrößenverteilung bezieht sich auf die durch Nassmahlen erzeugten, gemahlenen SiO₂-Körnungsteilchen. Die SiO₂-Nanoteilchen haben eine Teilchengrößenverteilung außerhalb des von der Messmethode erfassbaren Teilchengrößenbereichs.

Es hat sich bewährt, wenn die Aufschlämmung nach Abschluss des Nassmahlprozesses einen pH-Wert im Bereich von 3 bis 5 und einen Feststoffanteil im Bereich 76 bis 80 Gew.-% und vorzugsweise im Bereich von 77 bis 79,5 Gew.-%, hat.

Die oben genannten pH-Wert-Bereiche und Feststoffanteil-Bereiche kennzeichnen die jeweiligen Werte am Ende des Nassmahlprozesses. Ein vergleichsweise geringer Feststoffanteil von weniger als 76 Gew.-% beziehungsweise weniger als 77 Gew.-% kann zu starker Sedimentation und damit Partikelgrößensegregation und damit zu einem inhomogenen Grünkörper und Formkörper führen. Ein vergleichsweise hoher Feststoffanteil von mehr als 79,5 Gew.-%, beziehungsweise von mehr als 80 Gew.-% kann die Homogenisierung der Aufschlämmung erschweren.

Je nach den Höhenabmessungen und dem Volumen des herzustellenden Formkörpers können die Formgebungszeiten (Gießzeiten) im Bereich mehrerer Stunden bis Tagen liegen. In Anbetracht dessen ist es vorteilhaft, wenn die Aufschlämmung ein Sedimentationsverhalten aufweist, das dadurch charakterisiert ist, dass eine Säule der Aufschlämmung mit einer Höhe von 145mm nach einer Standzeit von 24h einen Bodensatz mit einer Bodensatz-Höhe von weniger als 20mm gebildet hat. Ob die Aufschlämmung diese Eigenschaft hat, kann anhand eines Versuches bestimmt werden, wie er unter "Definitionen und Messmethoden" beschrieben ist.

Die SiO₂-Körnung wird vorzugsweise durch Zerkleinern von synthetisch erzeugtem, transparentem Quarzglas erhalten, wobei das Zerkleinern ein elektrodynamisches und/oder ein elektrohydraulisches Fragmentieren des Quarzglases umfasst.

Bei der elektrodynamischen Fragmentierung wird die SiO₂-Körnung in einer Flüssigkeit, wie zum Beispiel in Wasser, mit ultrakurzen Hochspannungsimpulsen beaufschlagt. Bei einer Spannungsanstiegszeit von unter 500 ns schlagen die Hochspannungspulse bevorzugt durch die Feststoffpartikel hindurch. Grund dafür ist die bei kurzer Spannungsanstiegszeit höhere Durchschlagsfestigkeit der Flüssigkeit (Wasser) gegenüber Feststoffdurchschlägen. Im Unterschied dazu erfolgt die Funkenentladung bei der elektrohydraulischen Fragmentierung durch das flüssige Trägermedium (beispielsweise Wasser). In beiden Fällen führt der elektrische Durchschlag zu Druckschwankungen (Schockwellen), was ein weitgehend verunreinigungsfreies Zerkleinern der Quarzglaskörnung gewährleistet.

Der Grünkörper kann durch Ausgießen der Suspension in eine Form erhalten werden. Es sind aber auch andere Verarbeitungsmethoden für die Suspension geeignet, wie etwa Einsaugen in eine Form, Tauchen, Spritzen, Aufstreichen, Aufspachteln, Abziehen, Aufziehen, Aufrakeln und dergleichen.

Bei einer bevorzugten Verfahrensweise wird der Grünkörper vor dem Sintern getrocknet, wobei das Trocknen vorzugsweise bei erhöhter Temperatur erfolgt und eine Trocknungsdauer von mindestens 24h umfasst.

Aus ökonomischen Gründen ist die Trocknungsdauer so kurz wie möglich. In der Praxis kann das Trocknen je nach Formkörper oder Trocknungs-Temperatur aber mehrere Tage dauern, beispielsweise 7 Tage oder weniger. Die Trocknungs-Temperatur übersteigt vorteilhafterweise 120°C nicht, um einen schlagartigen Austritt von Wasserdampf zu vermeiden.

Es hat sich außerdem als günstig erwiesen, wenn ein Oberflächenbereich des Grünkörpers vor dem Sintern durch mechanische Bearbeitung; insbesondere durch Schleifen, entfernt wird, wobei vorzugsweise ein Bearbeitungswerkzeug eingesetzt wird, das Bearbeitungsflächen aus kunststoffgebundener Körnung aufweist.

Der Grünkörper hat in der Regel bereits eine Form, die der Endkontur des herzustellenden Formkörpers nahe kommt. Es handelt sich beispielsweise um einen massiven Vollkörper oder um einen Hohlkörper. Die maschinelle Bearbeitung erzeugt eine endkonturnahe Form oder bewirkt eine Glättung oder Strukturierung der Oberfläche. Außerdem wird ein Oberflächenbereich abgetragen, der Verunreinigungen aufweisen kann. Diese Verunreinigungen sind beispielsweise durch vorhergehende Prozessschritte auf die Oberfläche gelangt und können beim anschließenden Sinterschritt zu unerwünschter oberflächlicher Entglasung führen.

Im Vergleich zu einem metallischen oder keramischen Bindemittel kann der Abrieb des Kunststoff-Bindung des Schneid-, Schleif- oder Poliermittels ausgebrannt werden und führt daher nicht zu einem nennenswerten Eintrag von Verunreinigungen in den Grünkörper.

Beim Zerkleinern der Quarzglaskörnung gemäß Verfahrensschritt (a) als auch beim Nassmahlen in Verfahrensschritt (b) werden Bruchflächen und Bruchstücke erzeugt, die in der Regel keine sphärische, sondern eine nicht-sphärische, zerklüftete, splittrige Morphologie haben. Im Grünkörper verzahnen sich die diese SiO₂-Teilchen untereinander. Dies erhöht die Festigkeit, vermindert die Bruchneigung und erleichtert damit das Handling des Grünkörpers.

Der Grünkörper wird getrocknet und zu einem gasdichten, mechanisch stabilen Formkörper gesintert. Die Intensität des Sintervorgangs ist dabei so zu wählen, dass möglichst eine Versinterung bis zur geschlossenen Porosität des Formkörpers erzielt wird. Die zum Sintern geeigneten Parameter (Sintertemperatur, Sinterdauer, Atmosphäre) sind anhand einfacher Versuche zu ermitteln.

Bei einer vorteilhaften Verfahrensweise erfolgt das Sintern gemäß Verfahrensschritt (d) bei einer Sintertemperatur im Bereich zwischen 1325°C und 1600°C, insbesondere bei einer Sintertemperatur von weniger als 1500°C und noch besser von weniger als 1450°C, vorzugsweise unter Luft.

Hinsichtlich des Formkörpers aus opakem Quarzglas wird die oben genannte technische Aufgabe ausgehend von einem Formkörper mit den eingangs genannten Merkmalen erfindungsgemäß dadurch gelöst, dass das Quarzglas eine Homogenität aufweist, die dadurch definiert ist, dass der Formkörper einen ersten Volumenbereich mit einer maximalen Dichte und einen zweiten Volumenbereich mit einer minimalen Dichte aufweist, wobei der Dichteunterschied zwischen der maximalen Dichte und der minimalen Dichte weniger als 0,025 g/cm³ beträgt.

Es liegt auf der Hand, dass das Formkörper-Volumen im Idealfall überhaupt keinen Dichteunterschied aufweist. In der Praxis sind aber Unterschiede zwischen einer maximalen Dichte und einer minimalen Dichte im Rahmen der Messgenauigkeit vorhanden. Diese Dichteunterschiede entstehen beim Formen des Grünkörpers aus einer Aufschlämmung aus Mischungen unterschiedlicher mobiler Feststoffteilchen infolge von Schwerkraft, Sedimentation und/oder Entmischung (Segregation), wie dies weiter oben anhand der erfindungsgemäßen Verfahrens näher erläutert ist.

Ein Dichteunterschied zwischen der maximalen Dichte und der minimalen Dichte von weniger als 0,026 g/cm³, vorzugsweise weniger als 0,018 g/cm³, zeigt sich in einem visuell einheitlichen opaken Erscheinungsbild ohne transluzente oder transparente Volumenbereiche, beispielsweise an Formkörper-Kanten.

Der Formkörper gemäß der Erfindung wird bevorzugt anhand des oben beschriebenen Verfahrens hergestellt. Er besteht vorzugsweise aus synthetisch erzeugtem Quarzglas. Synthetisches Quarzglas zeichnet sich durch hohe Reinheit aus. Das synthetische Quarzglas wird unter Einsatz eines synthetisch erzeugten siliziumhaltigen Ausgangsmaterials erzeugt. Es ist hochrein in dem Sinne, dass die Hauptkomponente SiO₂ ist und unerwünschte Verunreinigungen maximal im sub-ppm-Bereich enthalten sind. Das opake Quarzglas weist vorzugsweise einen Gesamt-Verunreinigungsgehalt an Li, Na, K, Mg, Ca, Fe, Cu, Cr, Mn, Ti, Al, Zr, Ni, Mo und W von maximal 0,5 Gew.-ppm auf. Die Opazität des Formkörpers wird durch Anzahl, Größe und Form der Poren bestimmt. Diese wirken in der Quarzglas-Matrix als optische Störstellen und führen dazu, dass der Formkörper - je nach Schichtdicke - opak-transluzent oder undurchsichtig erscheint. Die Poren sind möglichst klein und gleichmäßig im Quarzglas-Formkörper verteilt. Mindestens 80% der Poren haben eine Porengröße von weniger als 20µm, vorzugsweise weniger als 15µm und besonders bevorzugt weniger als 10µm. Der genannte Porenanteil von 80 % bezieht sich nur auf Poren mit einer Porengröße von mehr als 1µm.

Der Formkörper ist gasdicht - hat also keine offene Porosität. Er ist auch für Anwendungen geeignet, bei denen es auf eine hohe thermische und chemische Stabilität und auf eine hohe Beständigkeit gegenüber ätzend wirkenden Gasen und Flüssigkeiten ankommt. Offene Porosität eines Werkstücks zeigt sich darin, dass es saugfähig ist, was anhand eines Farbeindringtests nachweisbar ist. Ein Formkörper mit einer Porosität von weniger als 3 % wird hier als "gasdicht" bezeichnet, was auch durch fehlende Saugfähigkeit beim Farbeindringtests nachweisbar ist. Die Porosität des Formkörpers liegt in der Regel im Bereich zwischen 0,5 und 3 Gew.-%.

Der Formkörper kann als diffus reflektierendes Bauteil in einer Heizeinrichtung eingesetzt werden. Dabei trägt die hohe Homogenität des Formkörpers auch zu einer gleichmäßigeren Reflektivität insbesondere im Infraroten Wellenlängenbereich bei. Dies wiederum ermöglicht die Reduktion von Wärmeverlusten und die Einsparung von Heizenergie und sie erlaubt die Optimierung der thermischen Verhältnisse in der Heizeinrichtung. Beispielsweise können nutzbare Ofenbereiche vergrößert und Prozessschwankungen reduziert werden.

Der Formkörper weist typischerweise eine oder mehrere oder alle der folgenden Eigenschaften:
- eine Viskosität bei 1350°C im Bereich 4x10¹⁰ bis 7x10¹⁰ dPa·s
- einen E-Modul von mindestens 68 GPa,
- einen Schermodul von mindestens 29 GPa,
- eine Biegefestigkeit von mindestens 100 MPa,
- eine elektrische Durchschlagfestigkeit von mindestens 30 kV/mm,
- einen spezifischen elektrischen Widerstand von mindestens 10¹⁶ Ωm,
- eine relative Permittivität von maximal 3,8.

### Definitionen und Messmethoden

Einzelne Begriffe der obigen Beschreibung werden im Folgenden ergänzend definiert. Die Definitionen sind Bestandteil der Beschreibung der Erfindung. Bei einem Widerspruch zwischen einer der folgenden Definitionen und der übrigen Beschreibung ist das in der übrigen Beschreibung Gesagte maßgeblich.

Sofern für einen Parameter eine Messmethode nicht angegeben ist, so ist für diesen Parameter die Standard-Messmethode anzuwenden und insbesondere diejenige Messmethode, die in der entsprechenden ISO-Vorschrift niedergelegt ist, deren Veröffentlichungsdatum dem der vorliegenden Anmeldung am nächst liegt. Sollten Messbedingungen nicht angegeben sein, so gelten als StandardBedingungen (SATP-Bedingungen) für die Temperatur 298,15 K (25°C, 77°F) und für den absoluten Druck 100 kPa (14,504 psi, 0.986 atm).

### Opakes Quarzglas

Opakes Quarzglas enthält kleine Blasen, die Lichtstreuung erzeugen und dem Glas ein transluzentes bis weißliches Aussehen verleihen. Zwischen Opazität und Transluzenz gibt es fließende Übergänge. Transluzenz bezeichnet die partielle Lichtdurchlässigkeit, die weniger auf optischer Absorption als auf Lichtstreuung beruht. Opazität ist die reziproke Eigenschaft der Transluzenz. Insoweit ist die Opazität ein Maß für die Lichtundurchlässigkeit des Quarzglases.

### Synthetisch erzeugtes Quarzglas

Synthetisches, transparentes Quarzglas wird beispielsweise durch Flammenhydrolyse oder Oxidation synthetisch erzeugter Siliziumverbindungen, durch Polykondensation organischer Siliziumverbindungen nach dem so genannten Sol-Gel-Verfahren oder durch Hydrolyse und Fällung anorganischer Siliziumverbindungen in einer Flüssigkeit erhalten. Bei der industriellen Herstellung von synthetischem Quarzglas fallen SiO₂-reiche Primärteilchen auch als so genannter Sootstaub oder Filterstaub an. Diese Stäube können nach einer Vorverdichtung durch Granulation ebenfalls zu synthetischem, transparentem Quarzglas gesintert oder geschmolzen werden.

### Aufschlämmung

Der Begriff "Aufschlämmung" wird für eine Suspension oder Dispersion aus einer Flüssigkeit und SiO₂-Feststoffteilchen verwendet. Als Flüssigkeit kann Wasser eingesetzt werden, das durch Destillation oder Deionisierung gereinigt ist, um den Gehalt an Verunreinigungen zu minimieren. Anstelle von Aufschlämmung ist auch der Begriff "Schlicker" gebräuchlich.

### Teilchengröße und Teilchengrößenverteilung

Teilchengröße und Teilchengrößenverteilung werden anhand der D₁₀- beziehungsweise D₅₀- oder D₉₀-Werte charakterisiert. Diese Werte werden aus Partikelgrößen-Verteilungskurven entnommen, die das kumulative Volumen der SiO₂-Partikel in Abhängigkeit von der Partikelgröße zeigen. Dabei kennzeichnet der D₁₀-Wert beispielsweise diejenige Partikelgröße, die von 10% des kumulativen Volumens der SiO₂-Partikel nicht erreicht wird und dementsprechend der D₉₀-Wert diejenige Partikelgröße, die von 90% des kumulativen Volumens der SiO₂-Partikel nicht erreicht wird. Die Partikelgrößenverteilung wird unter Einsatz eines Partikelanalysegeräts "Mastersizer 3000" der Firma Malvern Panalytical GmbH durch Streulicht- und Laserbeugungsspektroskopie nach ISO 13320 ermittelt.

### Messung des Sedimentationsverhaltens

In einen Messzylinder wird so viel an Aufschlämmung gegeben, bis sich eine Säulenhöhe von 145mm ergibt. Nach vorgegebenen Zeitabständen wird die Höhe des Überstands (über dem Bodensatz) gemessen. Daraus wird die Höhe des Sediments bestimmt. Der Messzylinder wird dabei nicht bewegt.

### Messung des maximalen Dichteunterschieds

Da der erfindungsgemäße Formkörper keine offene Porosität aufweist, ist eine einfache Dichtemessung von Messproben nach dem archimedischen Prinzip möglich.

Die Dichteverteilung wird ermittelt, indem über die Höhe eines zylinderförmigen Probenkörpers mindestens drei gleichmäßig verteilte Dichtemessproben in einem Messabstand von 1 cm und mit einem Probenvolumen von ca. 1 cm³ genommen werden. Die Dichtemessproben umfassen dabei den beim Formen (Gießen) des Grünkörpers unten angeordneten Volumenbereich und den beim Formen des Grünkörpers oben angeordneten Volumenbereich entlang der Zylinder- Längsachse des Probenkörpers. Ein Probenkörper mit einer Höhe von 5cm ermöglicht beispielsweise drei Dichtemessproben mit einem Mittenabstand von jeweils 1,5cm und einem Abstand zu den stirnseitigen Oberflächen von jeweils 0,5cm.

Aus den Dichtemessproben werden der Maximalwert und der Minimalwert der Dichte ermittelt.

### Porengröße / Porenvolumen (Porosität) / Porengrößenverteilung

Die Porengröße ist der maximale Abstand zwischen zwei gegenüberliegenden Porenwänden einer Pore. Das "Porenvolumen" eines porösen Materials bezeichnet das von Hohlräumen belegte, freie Volumen innerhalb des Materials. Das Porenvolumen wird anhand einer Dichtemessung ermittelt.

Die Bestimmung der Porosität erfolgt anhand der Dichtemessung unter Berücksichtigung der spezifischen Dichte von transparentem Quarzglas; diese liegt bei etwa 2,2 g/cm³.

Die Porengrößenverteilung bezeichnet die Häufigkeit des gemessenen Porendurchmessers. Die Porengröße wird anhand rasterelektronenmikroskopischer Aufnahmen von polierten Probenanschliffen ermittelt. Sie wird bei runden Poren als gemessener Durchmesser und bei nichtrunden Poren als mittlerer Durchmesser angegeben, der aus dem Flächen-Inkreis einer maximal großen Ellipse berechnet wird, die ausschließlich Porenfläche umgibt und dem Ellipsen-Durchmesser senkrecht dazu bei gleichem Mittelpunkt.

### Sintern

Mit "Sintern" wird ein Verfahrensschritt bezeichnet, bei dem der Formkörper bei erhöhter Temperatur von mehr als 1100°C behandelt und dabei thermisch verdichtet wird. Das Sintern erfolgt unter Luft, unter Inertgas oder unter Vakuum. Unter Vakuum wird ein absoluter Gasdruck von weniger als 2 mbar verstanden.

### Ausführungsbeispiel

Nachfolgend wird die Erfindung anhand von Ausführungsbeispielen und einer Zeichnung näher erläutert. Im Einzelnen zeigt:
- **Figur 1**: ein Fließdiagramm zur Erläuterung der Herstellung einer Ausführungsform des erfindungsgemäßen Formkörpers gemäß der Erfindung,
- **Figur 2**: ein Foto eines Querschliffs parallel zur Zylinder-Längsachse einer nach dem Stand der Technik hergestellten zylinderförmigen Referenzprobe,
- **Figur 3**: ein Diagramm zum Sedimentationsverlauf unterschiedlicher Aufschlämmungen,
- **Figur 4**: ein Balkendiagramm zur Fließfähigkeit unterschiedlicher Aufschlämmungen,
- **Figur 5**: ein Balkendiagramm zur Porengrößenverteilung eines Formkörpers gemäß der Erfindung,
- **Figur 6**: ein Diagramm zur Verteilung der Partikelgrößen in einer Aufschlämmung nach Abschluss des Nassmahlprozesses, und
- **Figur 7**: ein Balkendiagramm zur Dichte von Quarzglasplatten, die aus unterschiedlichen Aufschlämmungen erzeugt worden sind.

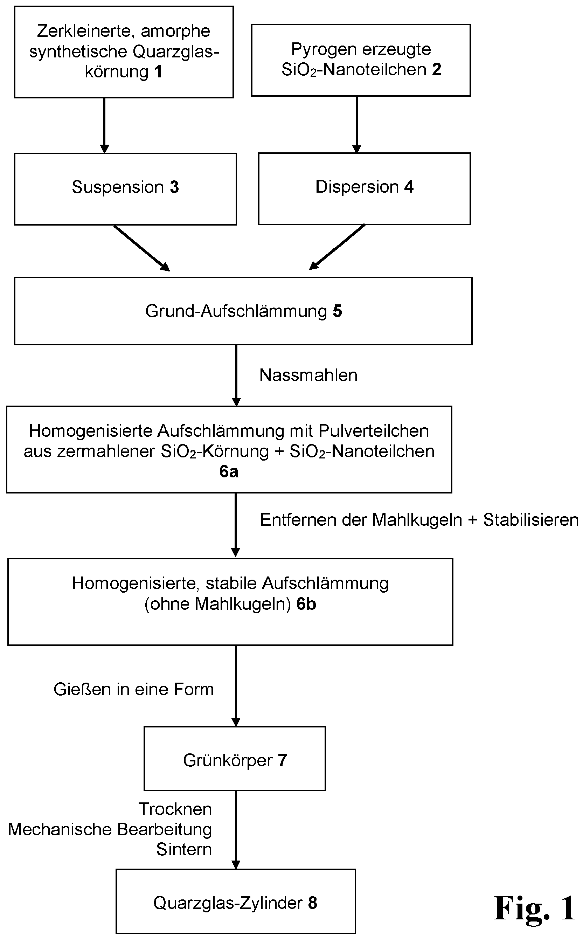

Anhand von **Figur 1** wird nachfolgend das erfindungsgemäße Verfahren am Beispiel der Herstellung eines plattenförmigen Formkörpers aus opakem Quarzglas zum Einsatz in einer Heizeinrichtung für die Halbleiterfertigung erläutert.

### Zerkleinerte Quarzglaskörnung 1

In üblicher Weise wird durch Flammhydrolyse eines Silicium-haltigen Ausgangsmaterials ein Zylinder aus transparentem, synthetischem Quarzglas erzeugt. Der Quarzglaszylinder wird in Segmente gesägt, und diese werden durch elektrodynamisches oder durch elektrohydraulisches Fragmentieren zu einer SiO₂-Körnung 1 zerkleinert. Diese Körnung aus synthetisch erzeugtem SiO₂ stellt eines der Ausgangsmaterialien der Aufschlämmung dar.

### Pyrogen erzeugte SiO₂-Nanoteilchen 2

Die hier eingesetzten pyrogen erzeugten SiO₂-Nanoteilchen 2 sind unter der Bezeichnung "ZANDOSIL" in Form von weißem, lockeren Pulver im Handel erhältlich. Das Pulver hat eine BET-Oberfläche von etwa 30 m²/g und eine Schüttdichte von etwa 200 g/l. Die SiO₂-Nanoteilchen 2 liegen in Form von Aggregaten oder Agglomeraten von SiO₂-Primärpartikeln vor und haben typischerweise eine breite Teilchengrößenverteilung im Bereich von etwa 5 nm bis etwa 200 nm, häufig um 100 +/- 50nm. Die SiO₂-Nanoteilchen haften leicht zusammen und bilden größere Cluster, was die Messung der individuellen Teilchengröße erschwert. Mikroskopisch ist die Teilchengröße einfach und vergleichsweise genau zu bestimmen.

### Suspension 3

Für einen Ansatz von 10 kg Aufschlämmung 1 (SiO₂-Wasser-Aufschlämmung) werden in einer mit Polyurethan ausgekleideten Trommelmühle mit ca. 20 Liter Volumeninhalt, 8,2 kg der amorphen, synthetischen Quarzglaskörnung 2 mit 1,8 kg deionisiertem Wasser 3 mit einer Leitfähigkeit von weniger als 1 µS vermischt.

### Dispersion 4

Die SiO₂-Nanoteilchen 2 werden in einem Gewichtsverhältnis von 50:50 in deionisiertem Wasser mit einer Leitfähigkeit von weniger als 1 µS in kolloidaler Form aufgenommen und diese Dispersion 4 wird dispergiert, indem sie mit einem Rührer homogenisiert und bis zur weiteren Verwendung rollend gelagert wird.

### Grund-Aufschlämmung 5

Die Suspension 3 und die Dispersion 4 werden zu einer Grund-Aufschlämmung 5 zusammengeführt. Dabei wird der Anteil der Dispersion 4 so eingestellt, dass die zugegebenen SiO₂-Nanoteilchen 1%, 2%, 5% beziehungsweise 10% des Feststoffanteils der Grund-Aufschlämmung 5 ergeben Der Feststoffanteil besteht bis dahin aus der amorphen, synthetischen Quarzglaskörnung und den SiO₂-Nanoteilchenund liegt im Bereich von etwa 76 Gew-% bis 80 Gew.-%. Im Verlauf des Nassmahlprozesses erhöht sich der Feststoffgehalt durch den Mahlkörperabrieb ein wenig.

Der Grund-Aufschlämmung 5 werden Mahlkörper aus synthetischem Quarzglas zugegeben und sie wird auf einem Rollenbock bei 20 U/min vermahlen. Im Verlauf des Nassvermahlens kommt es zu einer Absenkung des pH-Werts auf etwa 4. Gleichzeitig wird die Quarzglaskörnung 1 weiter zerkleinert, so dass fortlaufend neue Bruchflächen entstehen, die frische und vergleichsweise reaktive Oberfläche bilden. Mit dieser können die SiO₂ Nanoteilchen 2 in Wechselwirkung treten, was die Mobilität sowohl der SiO₂-Nanoteilchen als auch der gemahlenen SiO₂-Körnungsteilchen vermindern kann. Dadurch kann die Feststoffverteilung innerhalb des Volumens der Aufschlämmung stabilisiert und die Segregation der verschiedenen Feststoffkomponenten vermindert werden.

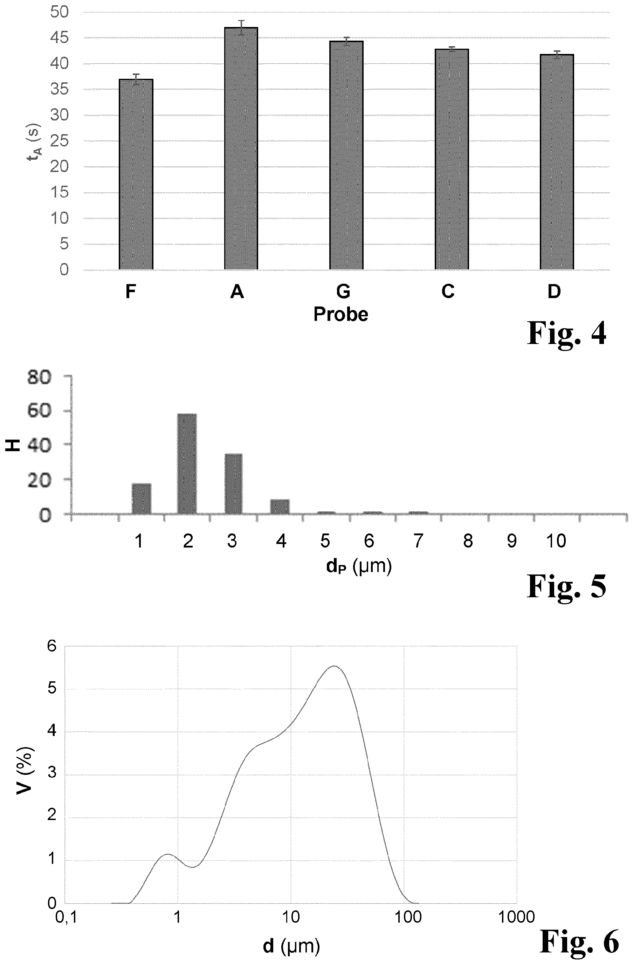

Beim Nassmahlen wird die ehemalige Quarzglaskörnung 1 zu feinen SiO₂-Pulverteilchen zermahlen. Der Nassmahlprozess dauert an, bis sich eine Teilchengrößenverteilung einstellt, bei der die Teilchengrößenverteilung der Pulverteilchen einen D₉₀-Wert von weniger als 50µm erreicht haben. In einem Ausführungsbeispiel ergab sich nach einer Nassmahldauer von 11Tagen eine Teilchengrößenverteilung mit einem D₉₀-Wert von 42,5 µm, einem D₅₀-Wert von 12,7µm und einem D₁₀-Wert von 2,18µm. Das Diagramm von **Figur 6** zeigt die entsprechende Teilchengrößenverteilung. Dabei ist auf der y-Achse das anteilige Teilchen-Volumen V (in %), und auf der x-Achse ist die Teilchengröße d (in µm) aufgetragen. Die Feinanteile mit Teilchengrößen von weniger al 1µm lassen sich mit der gewählten Messmethode nicht auflösen, also auch nicht die SiO₂-Nanoteilchen. Es ergeben sich aber genauere Ergebnisse bei den größeren Teilchen, nach denen sich die Beendigung des Nassmahlprozesses richtet.

### Stabilisierung der Aufschlämmung 6a

Resultat des Nassmahlprozesses ist eine homogenisierte Aufschlämmung 6a, aus Wasser, zermahlener SiO₂-Körnung und SiO₂-Nanoteilchen, die außerdem einen geringen, unbestimmten Anteil an SiO₂ aus dem Abrieb der Quarzglas-Mahlkörper enthält.

Die homogenisierte Aufschlämmung 6a hat nach dem Nassmahlprozess eine Temperatur um 40°C und sie zeichnet sich durch eine homogene Feststoffverteilung aus. Die Mahlkörper werden entfernt und die Aufschlämmung 6a wird unter Bewegung durch Lagern auf einem Rollenbock durch freies Abkühlen auf Umgebungstemperatur gebracht. Das Abkühlen der Aufschlämmung 6a auf Umgebungstemperatur (25°C) unter Rotation dauert mehrere Stunden, beispielsweise 30h bis 200h, im Ausführungsbeispiel sind es 48h. Diese Prozedur bewirkt eine Stabilisierung der vorher erzeugten homogenen Feststoffverteilung. Es wird eine homogenisierte, stabile Aufschlämmung 6b aus der Suspensionsflüssigkeit, gemahlenen SiO₂-Pulverteilchen, SiO₂-Nanoteilchen und einem gewissen SiO₂-Anteil aus Abrieb der Mahlkörper erhalten.

### Herstellung eines Grünkörpers und eines SiO₂-Formkörpers

Die homogenisierte, stabile Aufschlämmung 6b wird mit Druck beaufschlagt in eine Kunststoffform gegossen, die einen flüssigkeitsdichten Zylindermantel und eine poröse Bodenplatte aus Kunststoff aufweist. Die Bodenplatte grenzt an ein Drainagesystem an, an dem zur Beschleunigung der Entwässerung zusätzlich Unterdruck angelegt werden kann. In der Kunststoffform wird die homogenisierte, stabile Aufschlämmung 6b unter Bildung eines porösen, zylinderförmigen Grünkörpers 7 mit einem Außendurchmesser von 100mm entwässert. Es werden versuchsweise mehrere Grünkörper 7 mit Zylinderhöhen im Bereich von 50 bis 100mm hergestellt.

Zum Entfernen von gebundenem Wasser wird der Grünkörper 7 bei etwa 60°C zwei Tage lang in einem belüfteten Ofen getrocknet und nach dem Abkühlen werden verunreinigte Oberflächenbereiche des immer noch porösen Grünkörpers 7 abgeschliffen. Bei den dabei eingesetzten Schleifscheiben sind die Schleifkörper in einer Kunststoff-Bindung fixiert. Der Schleifabtrag beträgt etwa 0,5mm an der Zylindermantelfläche und etwa 5mm an den Stirnseiten.

Zum Sintern des Grünkörpers 7 wird dieser in einem Sinterofen unter Luft mit einer Heizrampe von 2°C/min auf eine Heiztemperatur von 1375°C (beziehungsweise bei einer Messprobe auf 1400°C) aufgeheizt und bei dieser Temperatur 4,5h gehalten. Das Abkühlen erfolgt mit einer Abkühlrampe von 2°C/min auf eine Ofentemperatur von 1000°C und danach ungeregelt bei geschlossenem Ofen. Es wird ein Quarzglas-Zylinder 8 mit einem Durchmesser um 90mm erhalten. Die Zylinderhöhe liegt je nach Ausgangshöhe des Grünkörpers 7 im Bereich von etwa 45 bis 90mm.

In Tabelle 1 sind für Messproben A bis G die Zusammensetzung, der Zeitpunkt der Zugabe von SiO₂-Nanoteilchen und die Sintertemperatur zusammengefasst.

**Tabelle 1**

| Probe | Anteil Nanoteilchen VOR [Gew.-%] | Anteil Nanoteilchen NACH [Gew.-%] | SinterTemperatur [°C] |
|---|---|---|---|
| A | 1 | 0 | 1375 |
| C | 5 | 0 | 1375 |
| D | 10 | 0 | 1375 |
| E | 10 | 0 | 1400 |
| F | 0 | 0 | 1375 |
| G | 0 | 1 | 1375 |

### Dabei bedeuten:

VOR in Spalte 2: der jeweils angegebene Anteil an SiO₂-Nanoteilchen wurde der Aufschlämmung vor Beginn des Nassmahlprozesses zugegeben.

NACH in Spalte 3: der jeweils angegebene Anteil an SiO₂-Nanoteilchen wurde der Aufschlämmung nach Abschluss des Nassmahlprozesses zugegeben.

Der so erhaltene Quarzglas-Zylinder 8 (Formkörper) besteht aus nicht mehr offenporigem, synthetischem Quarzglas mit einer Reinheit von mindestens 99,99 Gew.-% SiO₂, einer Dichte um 2,15 g/cm³ und einem. Die Gesamt-Porosität des Formkörpers beträgt etwa 2,5%. Die Poren haben maximale Abmessungen von weniger als 20µm; im Mittel (Medianwert) liegen die maximalen Abmessungen bei etwa 3µm.

Das Quarzglas zeigt einen Gesamt-Verunreinigungsgehalt an Li, Na, K, Mg, Ca, Fe, Cu, Cr, Mn, Ti, Al, Zr und Ni von 0,2 Gew.-ppm. Die genannten Verunreinigungen werden mittels ICP-OES oder ICP-MS-Methoden ermittelt.

Das Quarzglas des Formkörpers weist auf:
- eine Viskosität bei 1350°C von 6x10¹⁰ dPa·s,
- einen E-Modul von 70 GPa,
- einen Schermodul von 30 GPa,
- eine Biegefestigkeit von 120 MPa,
- eine elektrische Durchschlagfestigkeit von 32 kV/mm,
- einen spezifischen elektrischen Widerstand von 5x10¹⁶ Ωm,
- eine relative Permittivität von 3,8.

Anhand der Messproben von Tabelle 1 wurden die Dichteverteilung und die Porenverteilung, und an den dazugehörigen Aufschlämmungen der Messproben das Sedimentationsverhalten und die Auslaufzeiten bestimmt.

### Messung der Dichteverteilung

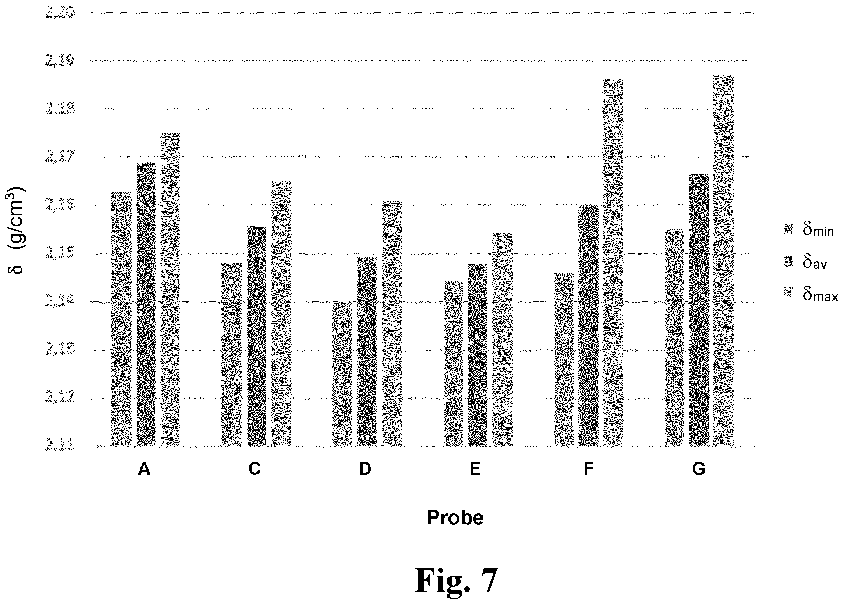

Das Balkendiagramm von **Figur 7** zeigt für die Messproben A bis G jeweils die Dichtewerte δ (in g/cm³) für die maximale Dichte (δₘₐₓ; rechter Balken), die minimale Dichte (δₘᵢₙ; linker Balken) und die mittlere Dichte (δₐᵥ; mittlerer Balken). Die Dichtemessproben stammen aus der zentralen Längsachse der jeweiligen Messprobe, und zwar aus dem oberen, mittigen und unteren Volumenbereich (bezogen auf die Orientierung des Grünkörpers nach dem Gießen der Aufschlämmung 6b).

Dabei zeigt sich, dass die Quarzglasplatten A bis E, deren Herstellung einen Nassmahlprozess in Gegenwart von SiO₂-Nanoteilchen umfasst, eine vergleichsweise geringe Spannweite zwischen minimaler und maximaler Dichte haben. Die maximale Spannweite beträgt hier etwa 0,21 g/cm³ (bei Probe D) und die minimale Spannweite liegt bei 0,11 g/cm³ (bei den Proben A und E). Dies ist ein Hinweis auf eine hohe Homogenität des so erzeugten Formkörpers. Allerdings zeigen die Quarzglas-Zylinder D und E mit einem Anteil der SiO₂-Nanoteilchen von 10 Gew.-% beim Nassmahlprozess eine vergleichsweise geringere Dichte als die Proben A (1% SiO₂-Nanoteilchen beim Nassmahlprozess)und C (5% SiO₂-Nanoteilchen).

Die Quarzglasplatte F wurde ohne Zugabe von SiO₂-Nanoteilchen erzeugt und dient als Referenzrobe. Bei der Quarzglasplatte G wurden der homogenisierten Aufschlämmung SiO₂-Nanoteilchen in einer Menge von 1 Gew.-% erst nach Abschluss des Nassmahlprozesses zugesetzt. Die Quarzglasplatten F und G zeigen eine große Spannweite in den Dichtewerten und damit eine geringe Homogenität.

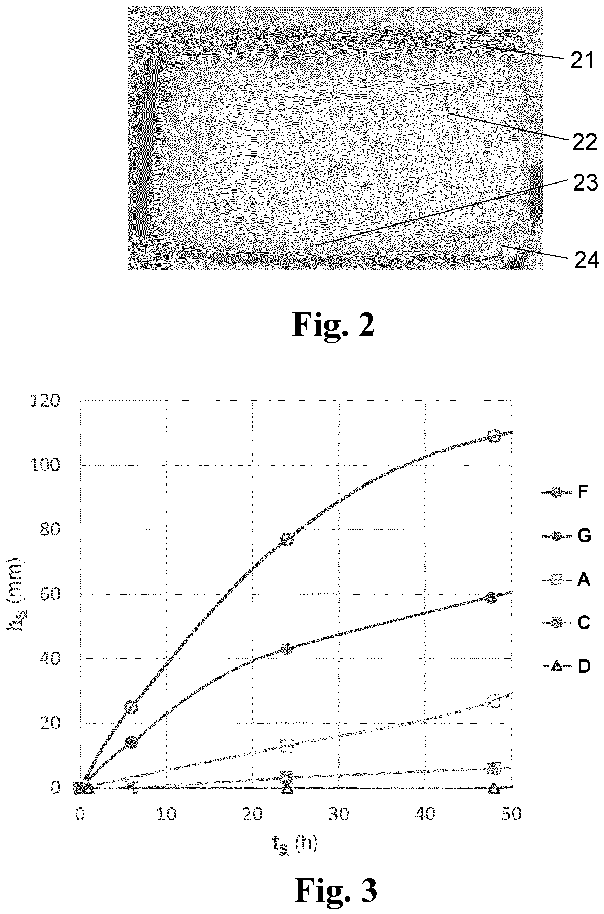

**Figur 2** zeigt einen Querschnitt in Richtung der Zylinderlängsachse der Referenzprobe F. Visuell erscheint die Oberfläche in der Plattenmitte 22 und im Bereich der Plattenunterseite 23 weiß und matt. Im Vergleich dazu ist das Quarzglas im Bereich der Platten-Oberseite 21 dunkler eingefärbt, was auf eine höhere Dichte und beginnende Transparenz hinweist. Die Bezugsziffer 24 bezeichnet einen Schneid-Artefakt, der hier unbeachtlich ist.

### Messung der Sedimentationsneigung der Aufschlämmung

Dazu werden 100 ml der Aufschlämmung 8 jeweils in einen Messzylinder gegeben, so dass die Aufschlämmung eine Säule mit einer Höhe von 145mm bildet. Nach vorgegebenen Zeitabständen wird mit einem Maßband die Höhe des Überstandes über dem Bodensatz gemessen. Daraus wird die Höhe des Sediments berechnet.

Das Diagramm von **Figur 3** zeigt das Ergebnis der Sedimentationsversuche von Aufschlämmungen mit unterschiedlichen Zusammensetzungen. Auf der y-Achse ist dabei die Sedimenthöhe hs (in mm) aufgetragen und auf der x-Achse die Zeit ts (in h) nach Versuchsbeginn.

Daraus ist ersichtlich, dass die Aufschlämmungen, bei denen das Nassmahlen in Gegenwart von SiO₂-Nanoteilchen erfolgte (Proben A, C, D), eine geringere Sedimentationsneigung haben als die Aufschlämmung ohne die Zugabe von SiO₂-Nanoteilchen (Probe F) beziehungsweise bei nachträglicher Zugabe (Probe G). Dieser Effekt macht sich insbesondere bei Messdauern von weniger als drei Tagen bemerkbar. In Tabelle 2 sind die Sedimentationshöhen nach Ablauf von 24h ab Versuchsbeginn aufgeführt.

**Tabelle 2**

| **Probe** | **h_{S} (nach 24h) [mm]** |
|---|---|
| **A** | 13 |
| **C** | 0 |
| **D** | 0 |
| **F** | 77 |
| **G** | 43 |

Dies zeigt, dass durch das Nassmahlen in Gegenwart von SiO₂-Nanoteilchen eine stabilere Aufschlämmung mit geringerer Sedimentationsneigung erreicht wird.

Eine geringe Sedimentationsneigung ist vor allem auch deshalb wichtig, weil je nach Füllhöhe der Gießform die Gießdauer beim Ausgießen der Aufschlämmung mehrere Stunden betragen kann; beispielsweise im Bereich von 24h bis 60h.

### Messung der Viskosität der Aufschlämmung

Zur qualitativen Messung der Viskosität der Aufschlämmung wurde ein Auslauftest durchgeführt. Dabei wird die stabilisierte, homogene Aufschlämmung 6b in eine 165mm-Einmal-Eppendorfpipettenspitze gegeben und elektronisch mittels Lichtschranke die Zeit gemessen, die zum Auslaufen von 10 ml Schlicker benötigt wird. Die Messung wird drei Mal durchgeführt und der Mittelwert berechnet.

Das Balkendiagramm von **Figur 4** zeigt Ergebnisse dieser Auslaufversuche für Aufschlämmungen unterschiedlicher Zusammensetzung. Auf der y-Achse ist die Auslaufzeit t_{A} (in s) aufgetragen.

Daraus ist ersichtlich, dass Aufschlämmungen, bei denen das Nassmahlen in Gegenwart von SiO₂-Nanoteilchen erfolgte (Proben A, C und D), eine längere Auslaufzeit und demnach eine höhere Viskosität haben als die Aufschlämmung ohne die Zugabe von SiO₂-Nanoteilchen (Probe F).

### Messung der Porengrößenverteilung

Das Histogramm von **Figur 5** zeigt das Ergebnis einer Messung der Verteilung der Porengrößen (Porendurchmesser) in der Messprobe A (mit 1 Gew.-% Zusatz an SiO₂-Nanoteilchen während des Nassmahlprozesses). Auf der y-Achse ist die Anzahl H (Häufigkeit) angegeben und auf der x-Achse die Porengröße dp (in µm) bei einer Aufrundung auf die volle Mikrometerzahl. Das Maximum der Verteilung liegt bei Porengrößen zwischen 1 und 2µm. Poren mit Porengrößen von 7µm und größer sind nicht vorhanden.

## Patentansprüche

1. Verfahren zum Herstellen eines Formkörpers aus opakem Quarzglas, umfassend die Verfahrensschritte:
(a) Bereitstellen von SiO₂-Körnung, erhalten durch Zerkleinern von Quarzglas mit einer Reinheit von mindestens 99,9 Gew.-% SiO₂,
(b) Bilden einer Aufschlämmung, die eine Suspensionsflüssigkeit und die SiO₂-Körnung enthält und die einen Gesamt-Feststoffanteil aufweist,
(c) Nassmahlen der SiO₂-Körnung in der Aufschlämmung unter Bildung gemahlener SiO₂-Körnungsteilchen,
(d) Formen eines porösen Grünkörpers aus der Aufschlämmung, und
(e) Sintern des porösen Grünkörpers zu dem Formkörper,
**dadurch gekennzeichnet, dass** das Nassmahlen der SiO₂-Körnung gemäß Verfahrensschritt (c) mindestens zeitweise in Gegenwart von SiO₂-Nanoteilchen erfolgt, deren Anteil am Gesamt-Feststoffanteil der Aufschlämmung im Bereich von 0,1 Gew.-% bis 10 Gew.-% liegt.

2. Verfahren nach Anspruch 1, **dadurch gekennzeichnet, dass** der Anteil der SiO₂-Nanoteilchen am Gesamt-Feststoffanteil im Bereich von 1 bis 2 Gew.-% liegt und vorzugsweise maximal 5 Gew.-% beträgt.

3. Verfahren nach Anspruch 1 oder 2, **dadurch gekennzeichnet, dass** das Nassmahlen der SiO₂-Körnung gemäß Verfahrensschritt (c) in Gegenwart von SiO₂-Nanoteilchen mindestens 1h, vorzugsweise mindestens 10h und besonders bevorzugt mindestens 120h beträgt.

4. Verfahren nach einem der vorhergehenden Ansprüche, **dadurch gekennzeichnet, dass** mindestens ein Teil der SiO₂-Nanoteilchen der Aufschlämmung in kolloidaler Form in einer Dispersion mit einer spezifischen Oberfläche (BET) von mindestens 20 m²/g zugegeben werden.

5. Verfahren nach einem der vorhergehenden Ansprüche, **dadurch gekennzeichnet, dass** die Aufschlämmung nach dem Nassmahlen unter Bewegung mindestens 1h, bevorzugt mindestens 10h, besonders bevorzugt mindestens 30h abkühlt.

6. Verfahren nach einem der vorhergehenden Ansprüche, **dadurch gekennzeichnet, dass** die Aufschlämmung nach dem Nassmahlen SiO₂-Teilchen mit einer Teilchengrößenverteilung aufweist, die durch einen D₉₀ kleiner als 50µm und einen D₅₀-Wert kleiner als 15µm definiert ist.

7. Verfahren nach einem der vorhergehenden Ansprüche, **dadurch gekennzeichnet, dass** die Aufschlämmung nach Zugabe der SiO₂-Nanoteilchen und nach dem Nassmahlen einen pH-Wert im Bereich von 3 bis 5 und einen Feststoffanteil im Bereich 76 bis 80 Gew.-% und vorzugsweise im Bereich von 77 bis 79,5 Gew.-%, hat.

8. Verfahren nach einem oder mehreren der vorhergehenden Ansprüche, **dadurch gekennzeichnet, dass** die Aufschlämmung ein Sedimentationsverhalten aufweist, das dadurch charakterisiert ist, dass eine Säule der Aufschlämmung mit einer Höhe von 145mm nach einer Standzeit von 24h einen Bodensatz mit einer Bodensatz-Höhe von weniger als 20mm gebildet hat.

9. Verfahren nach einem der vorhergehenden Ansprüche, **dadurch gekennzeichnet, dass** die SiO₂-Körnung durch Zerkleinern von synthetisch erzeugtem, transparentem Quarzglas erhalten wird, wobei das Zerkleinern ein elektrodynamisches und/oder ein elektrohydraulisches Fragmentieren des transparenten Quarzglases umfasst.

10. Verfahren einem der vorhergehenden Ansprüche, **dadurch gekennzeichnet, dass** der Grünkörper vor dem Sintern getrocknet wird, wobei das Trocknen eine Trocknungsdauer von mindestens 24h , vorzugsweise bei erhöhter Temperatur.

11. Verfahren nach einem der vorhergehenden Ansprüche, **dadurch gekennzeichnet, dass** ein Oberflächenbereich des Grünkörpers vor dem Sintern durch mechanische Bearbeitung; insbesondere durch Schleifen, entfernt wird, wobei ein Bearbeitungswerkzeug eingesetzt wird, das vorzugsweise Bearbeitungsflächen aus kunststoffgebundener Körnung aufweist.

12. Verfahren nach einem der vorhergehenden Ansprüche, **dadurch gekennzeichnet, dass** das Sintern gemäß Verfahrensschritt (d) bei einer Sintertemperatur im Bereich zwischen 1325°C und 1600°C, vorzugsweise bei 1500°C, besonders bevorzugt bei 1450, erfolgt.

13. Formkörper aus opakem, Poren enthaltendem Quarzglas mit einer geschlossenen Porosität, einer chemischen Reinheit von mindestens 99,9 Gew.-% SiO₂, einer Dichte im Bereich von 2,14 bis 2,19 g/cm³, **dadurch gekennzeichnet, dass** das Quarzglas eine Homogenität aufweist, die dadurch definiert ist, dass der Formkörper einen ersten Volumenbereich mit einer maximalen Dichte und einen zweiten Volumenbereich mit einer minimalen Dichte aufweist, wobei der Dichteunterschied zwischen der maximalen Dichte und der minimalen Dichte weniger als 0,026 g/cm³ beträgt.

14. Formkörper nach Anspruch 13, **dadurch gekennzeichnet, dass** mindestens 80% der Poren eine Porengröße von weniger als 15µm, vorzugsweise von weniger als 10µm und besonders bevorzugt von weniger als 5µm, haben.
